# EUROPEAN PATENT SPECIFICATION

(11) **EP 1 452 765 B1**
(45) Date of publication and mention of the grant of the patent: **31.08.2011**
(21) Application number: 04290216.3
(22) Date of filing: 28.01.2004
(51) Int. Cl.: F16D 65/097

(54) **Improvements in disc brake pads**
Verbesserter Bremsklotz
Patin de frein amelioré

(30) Priority: 30.01.2003 ES 200300238
(43) Date of publication of application: 01.09.2004
(60) Divisional application: 08101789.9
(73) Proprietor: Eurofren Brakes S.L.U., 42110 Olvega Soria (ES)
(72) Inventor: Serrano Fuentes, Cesar, 31192 Multiva Baja Navarra (ES)
(74) Representative: Intès, Didier Gérard André

(56) References cited:
- EP-A- 0 529 245
- EP-A- 0 877 176
- GB-A- 2 185 079
- US-A- 4 560 038

## Description

This invention relates to disc brake pads and, in particular, to the restraint of the securing of the said pads in order to prevent the vibration of the same in the assembly in which they are applied, proposing improvements which provide an advantageous solution in the arrangement of the corresponding means for the said function.

### Background of the invention

Disc brake pads comprise in general a metal support plate, which maybe die-cut or cast, on which a lining of friction material is incorporated in order to effect the action of braking by pressure on a brake disc intercalated between two pads of this type.

In the arrangement of the assembly for its function said pads are incorporated on a support where they are restrained with the necessary clearance for the gripping and freeing of the brake disc, said restraint being established by means of attachment which maintain the retention of the pads in the arrangement of the assembly.

However, the freedom required for the gripping and release of the brake disc gives rise to the pads being able to vibrate through the influence of the movements of the structure of the vehicle in which they are applied during its operation, it being thus necessary to incorporate spring means to ensure the fixed retention of the pads without preventing their freedom of acting on the brake disc.

For this purpose solutions exist such as that of expired Patent US 4 049 087, which arranges an accessory strip incorporated on the edge of the support plate of the brake pads, by means of which the pads are located in the assembly with an elastic limiting device which eliminates the vibrations without restricting freedom for the brake function.

The arrangement of the accessory strip entails a problem in the fixing of the same in an effective manner on the pad of application in such a manner that it satisfactorily fulfils the function of an elastic limiting device in order to secure the pad in the assembly without restricting its freedom for the functioning of the brake.

With respect to this problem, diverse fixing solutions have been developed, such as for example that of Patent FR 2 461 161, which has the form of sockets at the ends of the strip for the fixing; with respect to its embodiment Patent publication EP 0 534 987 A or EP 0 877 176, is in turn a development, which combines end supports of the strip with intermediate retaining hooks; in which solutions the strip is arranged with a given curvature for the purposes of establishing forced positioning in order to ensure the fixing, which same entails difficulty and the risk of accidents in carrying out the assembly and disassembly.

### Object of the invention

In view all the foregoing, according to this invention improvements are proposed which provide simplicity in the arrangement of the installation of the elastic limiting device strip of the said brake pads, permitting the easy installation without effort of said strip on the pads, without reducing the functional efficiency of the same.

In a conventional manner a longitudinally-bowed strip is employed, which according to the invention is comprised of bends in the form of hooks in one half of the width of its ends, whilst the other half of the width of the ends of the strip have the form of an upwardly-curved front edge, which ensures the stability of the strip on the brake pad or the metal support of the same in the transverse displacements of the pad as its wear occurs.

For its part the support plate of the brake pad incorporates perpendicular rods on the face where the lining of the friction material is arranged, which are capable of engaging the end bends of the strip, whilst the upper edge of the support plate has the form of merlons, facing which are the other halves of the ends of the strip, in an arrangement such that said other halves of the ends of the strip abut against said merlons when the strip extends. In other words, said merlons are raised portions of the upper edge of the support plate, defining a side against which said other halves of the ends of the strip abut when the strip extends.

In this manner an arrangement is obtained in which the length of the strip may correspond with the distance between the rods of the brake pad support plate, arising from which for the installation of the strip it is only necessary to place the end bends of the same over the rods of the brake pad support plate, without it being necessary to flex the strip and thus force is not required.

The fixing of the strip is brought about in this case by the engagement of the end bends over the rods of the brake pad support plate, the edge of the other half of the ends of the strip causing abutting up which restricts the displacement of the said ends of the strip when this latter extends, which prevents the occurrence of disengagement when the strip is subjected to pressure.

The rods of the brake pad support plate may be incorporated in a integral manner into the said plate, or be incorporated in a detachable manner by means of any fastening system, it being arranged that at least one of the said rods incorporates an end expansion, integral or detachable, in order to have the form of a retaining limiting device for the strip in the installed position, preventing this latter being able to come off by itself from the installed position referred to.

As a result of all this, the arrangement obtained with the improvements of the invention does certainly provide very advantageous features, taking on a life of its own and a preferential nature with respect to the embodiments already known of the same function.

### Brief description of the drawings

Figure 1 shows a front view of a brake pad with a strip incorporated according to the arrangement of the invention, the pad support plate being represented by dashes.
Figure 2 is a corresponding plan view with respect to the previous figure.
Figure 3 is a magnified detail of zone III of figure 1.
Figure 4 is a magnified detail of zone IV of figure 2.
Figures 5 and 6 are both views such as those of figures 1 and 2, with respect to a brake pad with another configuration.
Figures 7 and 8 are both views such as the previous ones, with respect to another brake pad with a different configuration.
Figures 9 and 10 are both views such as those of figures 1 and 2, with a strip of a different configuration, but equally according to the characteristics of the invention.
Figure 11 is a magnified detail of zone XI of figure 9.
Figure 12 is a magnified detail of zone XII of figure 10.
Figure 13 is another view such as that of figure 1, with a strip of a configuration differing from the previous ones, equally complying with the object of the invention.
Figure 14 is a magnified detail of zone XIV of the previous figure.
The 15 is a detail such as that of the previous figure, with the housing for the restraining rod of the strip formed by closed slot.

### Description of the preferred embodiments

The invention refers to improvements which affect the arrangement of the installation of a strip (1) on the pads of disc brakes, which same conventionally comprise a metal support plate (2), which may be die-cut or cast, and a lining (3) formed by a block of friction material fixed on one of the faces of the support plate (2).

The strip (1) is constituted in a known manner by a bowed element arranged on the upper edge of the support plate (2) of the brake pad, pressing with its ends on the said edge of the support plate (2), whilst the central part remains free, in order to establish by means of the said central part of the strip (1) an elastic support in the installation of the brake pad, such that by means of the bearing pressure the ends of the said strip (1) exert a force on the support plate (2), preventing the vibration of the brake pad.

According to the invention, the ends of the strip (1) are defined by one half of the width bent (4) in the form of a hook, whilst the other half of the width has the form of an upwardly-curved front edge (5).

The support plate (2) of the brake pad in turn has the form of shapes (6) like merlons (i.e. raised portions defining a side which, in the examples shown, is concave), in the end regions of the upper edge, whilst perpendicularly on the face on which the lining (3) is located, in the regions adjacent to the said ends of the upper edge, the plate (2) referred to incorporates rods (7).

The said rods (7) may form part of the plate (2) in one embodiment of its construction, but equally, without this altering their function, they may be incorporated in an accessory manner, by any known fastening means, for example driven in under pressure, threaded coupling, riveted, weld, etc.

The strip (1) is formed with a distance between the end bends (4) coinciding with the distance separating the rods (7) on the support plate (2) of the brake pad and with a distance between the curved edges (5) of the other half of the ends somewhat less than the distance between the internal edges of the merlons (6) of the edge of the plate (2).

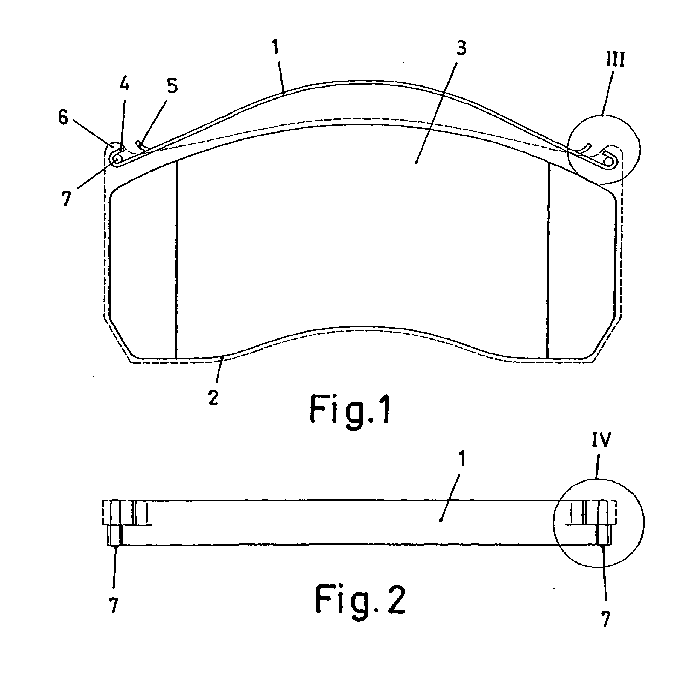

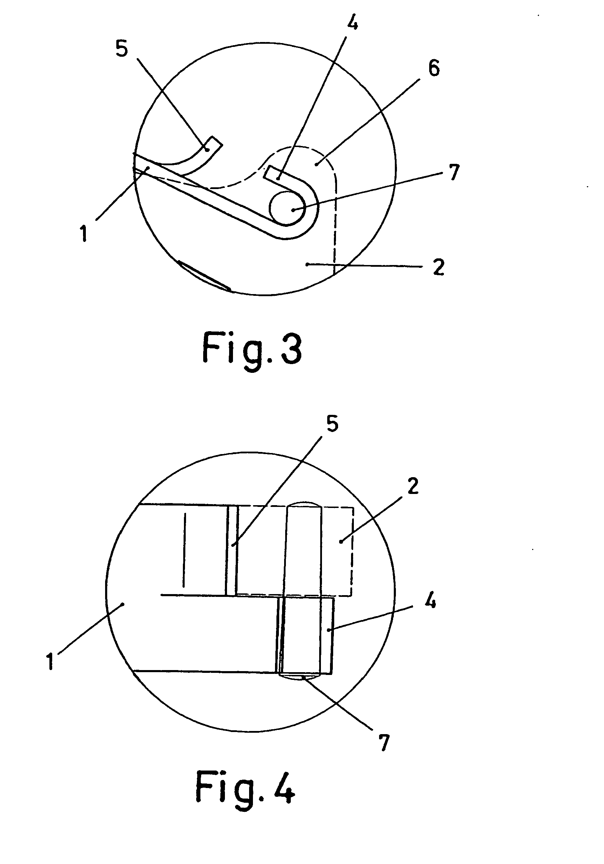

Under these conditions, the installation of the strip (1) on the brake pad may be executed by means of the simple insertion of the end bends (4) of the same over the rods (7) of the support plate (2) of the brake pad, until abutting against the corresponding face of the said plate (2), in that position the curved edges (5) face the merlons (6) at a given distance from the same, as may be particularly observed in figures 1 and 3.

The installation of the strip (1) does not thus present any difficulty, as it is not necessary to flex the said strip (1) in order to fix it, as this occurs simply by engaging the bends (4) over the rods (7) and the pressure of the parts which correspond to the curved edges (5) on the upper edge of the support plate (2). As the strip (1) does not require to be flexed, the risk of accidents is also avoided in the execution of its installation and removal, given that the absence of tension prevents the strip (1) from escaping and springing off during the manipulations.

In its arrangement on the corresponding brake pad, according to the manner described, the strip (1) permits the establishment of an elastic pressure support on the brake pad in its installation of application, because as a result of the central part of the strip (1) being constrained by pressure, the ends of the same exert pressure on the upper edge of the support plate (2) by means of the half of the width which corresponds to the curved edges (5) and on the rods (7) by means of the bends (4).

On exerting the said pressure, the strip (1) extends displacing its ends on the corresponding supports, the said displacement being restricted by the curved edges (5), given that when these latter reach the merlons (6) they abut against them preventing the continuation of the displacement. By this means the bends (4) are prevented from being able to become disengaged from the rods (7) and that the deformation of the strip (1) with respect to its static form may become excessive with the risk of deterioration.

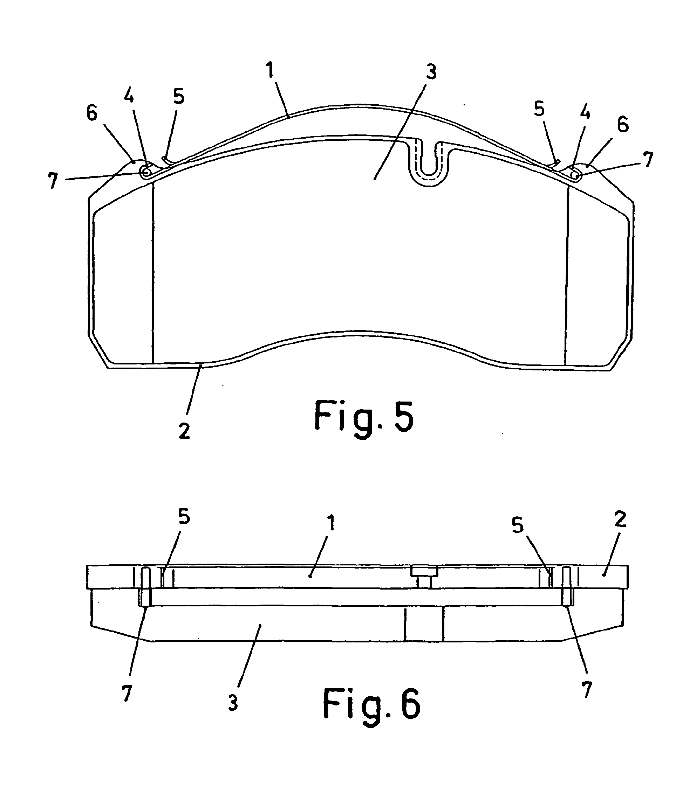

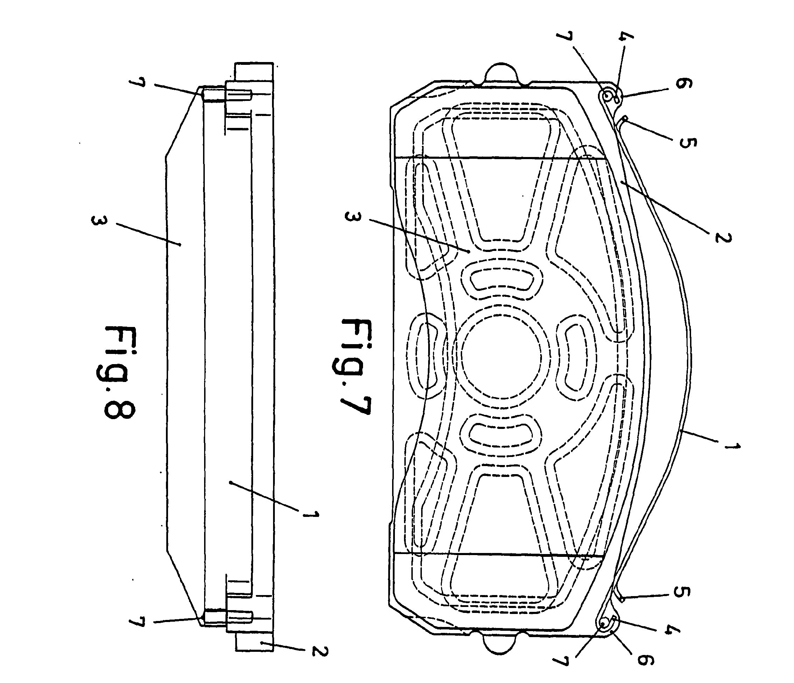

The installation of the strip (1) according to the manner stated is possible with brake pads of different forms, as shown in figures 1, 2, 5, 6, 7 and 8, without these configurations being limitative.

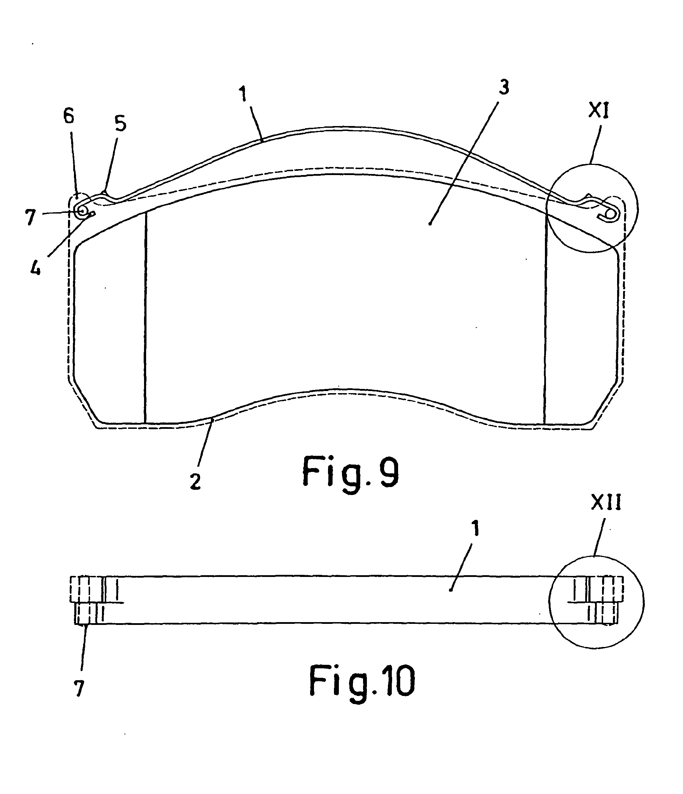

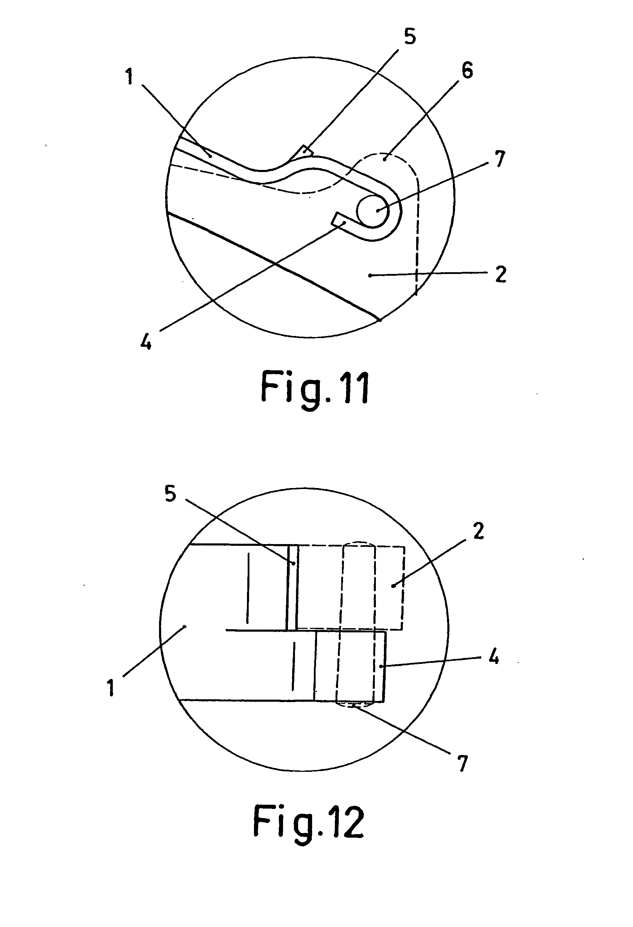

With the same effect and thus equally complying with the object of the invention, the bends (4) of the ends of the strip (1) may be made by means of bending upwards the corresponding halves of the ends of the strip (1), as in figures 1 to 8, or by bending downwards, as in figures 9 to 12, as in both cases the effect of the pressure of the strip (1) on the brake pad is similar, when the strip (1) is constrained by a pressure on its central region.

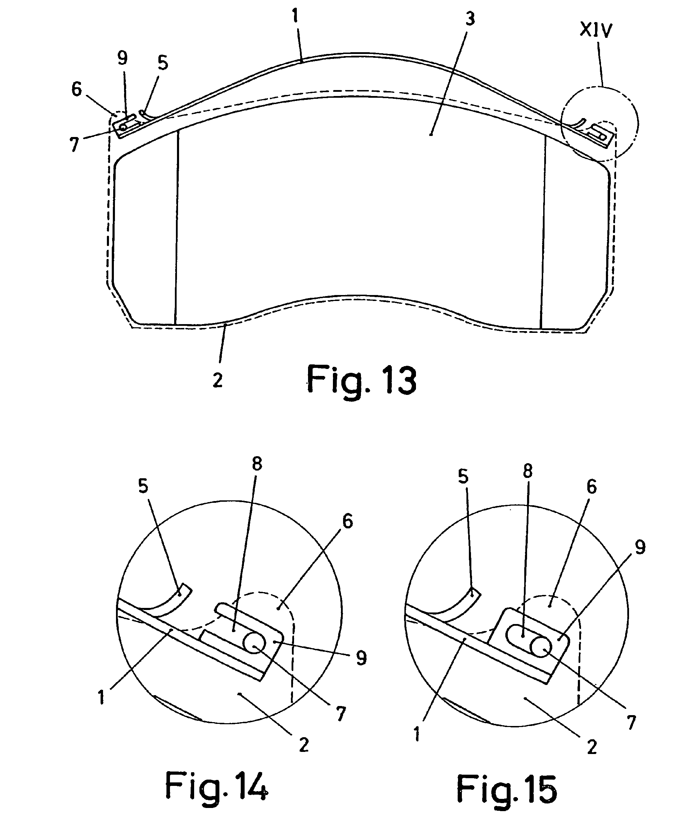

In the same manner and without this altering the concept, the hooks of the ends of the rod (1) for their installation with respect to the rods (7) of the support plate (2) of the brake pad, may be defined in the form of a slot (8) made in a portion of flange (9) bent perpendicularly on the edge of the corresponding halves of the ends of the strip (1), as shown in figure 13. The slots (8) for engaging the rods (7) may have, in this case, an open configuration, as in figure 14, or a closed configuration, as in figure 15, in both cases equally complying with the object of the invention.

In order to ensure the retention of the strip (1) in its installation on the brake pad, it is arranged that at least one of the rods (7) shall have an expansion at its free end in order to act as retention preventing the strip (1) coming off the installation by itself. The said limiting expansion in order to retain the strip (1) in the installation may be a broadening in the form of a head of the rod itself (7), or accessory elements incorporated in a supplementary and disassemblable manner, such as nuts, clips, etc.

### Industrial application of the invention

The object of the invention, according to the manner described, is applicable to disc brakes of any kind, both of industrial vehicles and of automobiles, and of any machine which possesses brakes of this type, in which the corresponding brake pads due to the free play necessary in the installation may suffer vibrations which it is desired to suppress.

## Claims

1. Disc brake pad device, comprising a brake pad which comprises a metal support plate (2) and a lining (3) of friction material, and a strip (1) formed by a longitudinally-bowed leaf element which is incorporated on the upper edge of the support plate (2), **characterised in that** the ends of the strip (1) have the form in one half of their width of bends (4) in the manner of hooks, whilst the other half of their width is defined with an upwardly-curved front edge (5); the support plate (2) of the brake pad, in the end regions adjacent to the upper edge of the face on which the lining (3) is located, incorporating perpendicular rods (7), with respect to which the end bends (4) of the strip (1) are engaged, whilst the upper edge of the said support plate (2) has in the end regions the form of shapes (6) in the manner of merlons, facing which at a given distance above the upper edge referred to are the upwardly-curved front edges (5) of the other half of the width of the ends of the strip (1).

2. Disc brake pad device according to claim 1, **characterised in that** the upwardly-curved front edges (5) of the ends of the strip (1) are at a distance from the merlons (6) of the support plate (2), in order to abut against them at a distance less than that which the bends (4) permit on the rods (7) when the strip (1) extends constrained by a central pressure on it.

3. Disc brake pad device according to claim 1 or 2, **characterised in that** the rods (7) may be integral with the support plate (2) or be incorporated in an accessory manner by any fastening means.

4. Disc brake pad device according to any one of claims 1 to 3, **characterised in that** at least one of the rods (7) has at its free end a broadening, integral or accessory, in order to retain the strip (1).

5. Disc brake pad device according to any one of claims 1 to 4, **characterised in that** the bends (4) of the ends of the strip (1) may be formed indifferently by bending upwards or downwards.

6. Disc brake pad device according to any one of claims 1 to 5, **characterised in that** the hooks of the ends of the strip (1) for their installation with respect to the rods (7) of the support plate (2) are constituted in the form of slots (8) made in portions of flange (9) perpendicularly bent on the edges of the corresponding halves of the ends of the strip (1), said slots (8) being open or closed.

## Patentansprüche

1. Scheibenbremsbelagvorrichtung, die einen Bremsbelag, welcher eine metallische Trägerplatte (2) und einen Belag (3) aus Reibmaterial umfaßt, und einen Streifen (1) umfaßt, der von einem längsgekrümmten Blattelement gebildet wird, welches am oberen Rand der Trägerplatte (2) vorgesehen ist, **dadurch gekennzeichnet, daß** die Enden des Streifens (1) in einer Hälfte ihrer Breite die Form von Biegungen (4) in der Art von Haken aufweisen, während die andere Hälfte ihrer Breite mit einem aufwärts gekrümmten vorderen Rand (5) definiert ist, wobei die Trägerplatte (2) des Bremsbelags in den Endbereichen, welche dem oberen Rand der Seite, auf welcher sich der Belag (3) befindet, benachbart sind, senkrechte Stäbe (7) aufweist, mit welchen die Endbiegungen (4) des Streifens (1) in Eingriff stehen, während der obere Rand der Trägerplatte (2) in den Endbereichen die Form von Gebilden (6) in der Art von Zinnen aufweist, denen gegenüber sich in einem gegebenen Abstand von dem besagten oberen Rand die aufwärts gekrümmten vorderen Ränder (5) der anderen Hälfte der Breite der Enden des Streifens (1) befinden.

2. Scheibenbremsbelagvorrichtung nach Anspruch 1, **dadurch gekennzeichnet, daß** die aufwärts gekrümmten vorderen Ränder (5) der Enden des Streifens (1) sich in einem Abstand von den Zinnen (6) der Trägerplatte (2) befinden, um an sie in einem Abstand anzustoßen, der kleiner ist als derjenige, welchen die Biegungen (4) an den Stäben (7) ermöglichen, wenn der Streifen (1) sich unter der Einwirkung eines in der Mitte auf ihn ausgeübten Druckes streckt.

3. Scheibenbremsbelagvorrichtung nach Anspruch 1 oder Anspruch 2, **dadurch gekennzeichnet, daß** die Stäbe (7) mit der Trägerplatte (2) einstückig ausgebildet oder als zusätzliche Teile mit einem beliebigen Befestigungsmittel an ihr angebracht sein können.

4. Scheibenbremsbelagvorrichtung nach einem der Ansprüche 1 bis 3, **dadurch gekennzeichnet, daß** mindestens einer der Stäbe (7) an seinem freien Ende eine Verbreiterung aufweist, die angeformt oder als zusätzliches Teil angebracht ist, um den Streifen (1) zu halten.

5. Scheibenbremsbelagvorrichtung nach einem der Ansprüche 1 bis 4, **dadurch gekennzeichnet, daß** die Biegungen (4) der Enden des Streifens (1) ebenso durch Aufwärts- wie durch Abwärtsbiegen geformt sein können.

6. Scheibenbremsbelagvorrichtung nach einem der Ansprüche 1 bis 5, **dadurch gekennzeichnet, daß** die Haken der Enden des Streifens (1) für ihre Anbringung in Bezug auf die Stäbe (7) der Trägerplatte (2) in der Form von Langlöchern (8) ausgebildet sind, die in Flanschabschnitten (9) hergestellt sind, die an den Rändern der entsprechenden Hälften der Enden des Streifens (1) senkrecht umgebogen sind, wobei die Langlöcher (8) offen oder geschlossen sind.

## Revendications

1. Dispositif formant patin de frein, comprenant un patin de frein qui comprend une plaque de support en métal (2) et une garniture (3) en matériau de friction, et un ruban (1) formé par un élément en forme de feuille cintrée longitudinalement qui est incorporée sur le bord supérieur de la plaque de support (2), **caractérisé en ce que** les extrémités du ruban (1) ont, dans une moitié de leur largeur, la forme de coudes (4) à la manière de crochets, tandis que l'autre moitié de leur largeur est définie avec un bord frontal (5) incurvé vers le haut ; la plaque de support (2) du patin de frein, dans les régions terminales adjacentes au bord supérieur de la face sur laquelle est située la garniture (3), incorporant des tiges perpendiculaires (7), par rapport auxquelles les coudes d'extrémité (4) du ruban (1) sont engagés, alors que le bord supérieur de ladite plaque de support (2) possède, dans les régions terminales, des formes (6) à la manière de merlons, avec en face d'eux à une distance donnée au-dessus du bord supérieur, les bords frontaux incurvés vers le haut (5) de l'autre moitié de la largeur des extrémités du ruban (1).

2. Dispositif formant patin de frein selon la revendication 1, **caractérisé en ce que** les bords frontaux incurvés vers le haut (5) des extrémités du ruban (1) se trouvent à une certaine distance depuis les merlons (6) de la plaque de support (3), afin de venir buter contre ceux-ci à une distance inférieure à celle que permettent les coudes (4) sur les tiges (7) quand le ruban (1) s'étend en étant contraint par une pression centrale sur lui-même.

3. Dispositif formant patin de frein selon la revendication 1 ou 2, **caractérisé en ce que** les tiges (7) peuvent être intégrées avec la plaque de support (2) ou être incorporées d'une manière accessoire par des moyens de fixation quelconques.

4. Dispositif formant patin de frein selon l'une quelconque des revendications 1 à 3, **caractérisé en ce qu'**au moins une des tiges (7) comporte à son extrémité libre un élargissement, intégré ou accessoire, afin de retenir le ruban (1).

5. Dispositif formant patin de frein selon l'une quelconque des revendications 1 à 4, **caractérisé en ce que** les coudes (4) des extrémités du ruban (1) peuvent être formés indifféremment en étant coudés vers le haut ou vers le bas.

6. Dispositif formant patin de frein selon l'une quelconque des revendications 1 à 5, **caractérisé en ce que** les crochets des extrémités du ruban (1), pour leur installation par rapport aux tiges (7) de la plaque de support (2), sont constitués sous la forme de fentes (8) ménagées dans des portions de bride (9) coudées perpendiculairement sur les bords des moitiés correspondantes des extrémités du ruban (1), lesdites fentes (8) étant ouvertes ou fermées.
